# EUROPÄISCHE PATENTANMELDUNG

(11) **EP 4 792 701 A1**
(43) Veröffentlichungstag der Anmeldung: **19.08.2026**
(21) Anmeldenummer: 25157592.4
(22) Anmeldetag: 13.02.2025
(51) Int. Cl.: A47J 43/06, A47J 43/07

(54) **KÜCHENMASCHINE UND VERFAHREN ZUR SPEISENZUBEREITUNG**

(71) Anmelder: Vorwerk & Co. Interholding GmbH, 42275 Wuppertal (DE)
(72) Erfinder: KUHLEN, Tobias, 42327 Wuppertal (DE); HÜGGING, Sven, 44137 Dortmund (DE); DEMTRÖDER, Jana, 44263 Dortmund (DE); GRÜBER, Sabrina, 44795 Bochum (DE)
(74) Vertreter: Gille Hrabal Partnerschaftsgesellschaft mbB Patentanwälte

(57) **Zusammenfassung**

Die Erfindung betrifft eine Küchenmaschine und ein Verfahren zum Zubereiten einer Speise unter Verwendung einer Küchenmaschine. Eine Küchenmaschine (1) umfasst ein Basisteil (3), wobei das Basisteil (3) eine Schnittstelle (9) zur mechanischen und/oder elektrischen Kopplung mit einem Anbauteil (5) aufweist. Die Küchenmaschine (1) ist dazu eingerichtet, eine Art des Anbauteils (5) zu erkennen und abhängig von der erkannten Art des Anbauteils (5) eine Funktion der Schnittstelle (9) zu beeinflussen, um das Anbauteil (5) für eine Speisenzubereitung zu betreiben. Auf diese Weise kann die Schnittstelle flexibel verwendet werden.

## Beschreibung

Die Erfindung betrifft eine Küchenmaschine und ein Verfahren zum Zubereiten einer Speise unter Verwendung einer Küchenmaschine.

Die aus dem Stand der Technik bekannte Küchenmaschinen umfassen ein Basisteil und ein Speisenzubereitungsgefäß, das mit dem Basisteil mechanisch und elektrisch gekoppelt werden kann. Druckschrift EP 2 698 088 B1 offenbart eine elektrisch betriebene Küchenmaschine, bei der ein Deckel eines Gargefäßes mittels zweier Walzen von oben verriegelt wird, die in einer Verschlussstellung ein Abnehmen des Deckels nach oben formschlüssig blockieren.

Die Aufgabe der Erfindung besteht darin, eine weiterentwickelte Küchenmaschine und ein zugehöriges Verfahren zur Speisenzubereitung bereitzustellen.

Die Aufgabe wird gelöst durch die Küchenmaschine gemäß Anspruch 1 und das Verfahren gemäß dem nebengeordneten Anspruch. Vorteilhafte Ausgestaltungen sind in den Unteransprüchen angegeben.

Zur Lösung der Aufgabe dient eine Küchenmaschine, die ein Basisteil umfasst. Das Basisteil umfasst bevorzugt eine Schnittstelle zur mechanischen und/oder elektrischen Kopplung mit einem Anbauteil. Insbesondere ist die Küchenmaschine, z. B. das Basisteil, dazu eingerichtet, eine Art des Anbauteils zu erkennen. Insbesondere ist die Küchenmaschine, z. B. das Basisteil, dazu eingerichtet, abhängig von einer erkannten Art des Anbauteils eine Funktion der Schnittstelle zu beeinflussen. Dies dient insbesondere dazu, ein Anbauteil für eine Speisenzubereitung zu betreiben.

Die Erfindung erlaubt es, die Schnittstelle des Basisteils flexibel zu verwenden und die Verwendung abhängig von dem erkannten Anbauteil auszugestalten. Abhängig vom erkannten Anbauteil kann das Verhalten der Schnittstelle automatisch angepasst werden, um eine Speise zuzubereiten. Jedes Anbauteil kann automatisch mit den jeweils benötigten Funktionen betrieben werden. Eine Fehlbedienung wird ausgeschlossen. Zudem kann mit minimalem Aufwand ein zusätzliches Anbauteil nachgerüstet und verwendet werden, welches andere Funktionen der Schnittstelle benötigt. So kann der Funktionsumfang einfach erweitert werden.

Eine Küchenmaschine kann ein Basisteil und ein damit verbindbares Anbauteil umfassen. Typischerweise hält bzw. trägt das Basisteil das Anbauteil und/oder dient der Steuerung. Das Basisteil ist typischerweise dazu geeignet, auf einer Oberfläche aufgestellt zu werden. Das Basisteil weist insbesondere eine Ausgabeeinrichtung und/oder eine Eingabeeinrichtung auf. Das Basisteil umfasst typischerweise einen Motor zum Antreiben eines drehbaren Werkzeugs oder einer Werkzeugaufnahme für ein Werkzeug im Anbauteil. Das Basisteil kann im verbundenen Zustand dem Anbauteil elektrische Energie bereitstellen, ein Werkzeug des Anbauteils drehen und/oder Daten an das Anbauteil und/oder von dem Anbauteil übertragen. Das Basisteil kann bevorzugt elektrische Energie für Funktionskomponenten des Anbauteils bereitstellen.

Ein Anbauteil kann beispielsweise ein Speisenzubereitungsgefäß sein, z. B. ein Topf, eine Pfanne, ein Dampfgarer, ein Schnellkochtopf (Dampfdruckkochtopf), ein Zerkleinerungsgerät, eine Popcornmaschine, ein Frittiergefäß, oder eine Rührschüssel. Ein Anbauteil kann ein Speisenzubereitungsgefäß sein, welches mehrere der genannten Funktionen in sich vereint. Ein Speisenzubereitungsgefäß ist ein Gefäß, in das eine Speise oder eine Zutat für eine Speise zwecks Durchführung eines Zubereitungsschrittes eingebracht werden kann. Eine Speise im Sinne der Erfindung umfasst auch einzelne Zutaten. Ein Zubereitungsschritt kann z. B. Erhitzen, Rühren, Zerkleinern und/oder Ruhenlassen umfassen. Ein Speisenzubereitungsgefäß kann einteilig oder mehrteilig sein. Es kann eine Vielzahl von Anbauteilen vorhanden sein, die sich beispielsweise hinsichtlich Höhe, Durchmesser, Art, unterstützten Funktionen und Anzahl der Funktionskomponenten unterscheiden können.

Ein Anbauteil kann eine oder mehrere Funktionskomponenten aufweisen, beispielsweise ein insbesondere drehbares Werkzeug zur Speisenzubereitung, z. B. ein Rührwerk, ein Knetwerkzeug, ein Mixmesser oder eine Schneid- und/oder Reibscheibe. Das Werkzeug kann zum Rühren und/oder Zerkleinern von Speisen dienen. Auf den Antrieb des Werkzeugs wird unten im Detail eingegangen. In einer Ausgestaltung kann das Werkzeug an eine Werkzeugaufnahme montierbar sein, die mit dem Anbauteil verbunden ist.

Alternativ oder ergänzend kann ein Anbauteil als Funktionskomponente eine Heizeinrichtung umfassen, um das Anbauteil und/oder eine darin befindliche Speise zu erhitzen. Es können eine, zwei oder mehr Heizeinrichtungen vorhanden sein, die gemeinsam und/oder individuell angesteuert werden können. Es kann z. B. eine Dickschichtheizung, eine Röhrenheizung und/oder eine flächige Heizung vorhanden sein. Ein Anbauteil kann zudem einen oder mehrere Sensoren umfassen, beispielsweise einen Temperatursensor, einen Drucksensor und/oder einen Sensor zum Erkennen der Art eines Funktionsmoduls. Ein Anbauteil kann zudem eine kabelgebundene oder kabellose Schnittstelle zum Senden und/oder Empfangen von Daten aufweisen.

Es sind beliebige Anbauteile mit beliebigen Kombinationen von Funktionskomponenten möglich. Ein Anbauteil kann ein Speisenzubereitungsgefäß mit lediglich einem oder mehreren Temperatursensoren sein. Mehrere Temperatursensoren erlauben die Ermittlung der Temperatur genauer und/oder in höherer räumlicher Auflösung. Das Speisenzubereitungsgefäß hat dann keine Heizeinrichtung und kein drehbares Werkzeug. Ein solches Speisenzubereitungsgefäß kann beispielsweise zum Gehen von Teig verwendet werden. Ein anderes Anbauteil kann eine Pfanne sein, die eine Heizeinrichtung aber kein drehbares Werkzeug aufweist. Ein weiteres Anbauteil kann ein Rührgefäß sein, welches nur für geringe Drehzahlen ausgelegt ist.

Die Schnittstelle dient der mechanischen und/oder elektrischen Kopplung des Anbauteils mit dem Basisteil. Insbesondere ist mit der mechanischen Kopplung eine unmittelbare mechanische Kopplung gemeint, bei der sich Anbauteil und Basisteil kontaktieren. Für ein mechanisches Koppeln ist die Schnittstelle insbesondere eine physische Schnittstelle. Das Anbauteil kann auf diese Weise von dem Basisteil getragen oder gehalten werden. Das Koppeln meint bevorzugt ein Positionieren des Anbauteils derart in oder auf der Schnittstelle, dass das Anbauteil mit dem Basisteil für eine Speisenzubereitung betrieben werden kann. Typischerweise befindet sich zumindest ein Großteil des Anbauteil dann oberhalb zumindest eines Großteils des Basisteils. Das Anbauteil wird also auf das Basisteil aufgesetzt. Das Anbauteil kann eine korrespondierende Schnittstelle aufweisen, die mit der Schnittstelle des Basisteils gekoppelt werden kann.

Die Schnittstelle kann grundsätzlich beliebig geformt sein, beispielsweise als ebene Fläche. Die Schnittstelle kann vorteilhaft eine Aufnahme zum Einsetzen des Anbauteils umfassen. Das Anbauteil kann in die Aufnahme eingesetzt werden, um dort betrieben zu werden. Die Aufnahme kann als Vertiefung ausgestaltet sein oder eine oder mehrere Vertiefungen aufweisen, in die das Anbauteil oder einzelne Komponenten des Anbauteils eingesetzt werden können. In diesem Fall wird beim Einsetzen zumindest ein Abschnitt des Anbauteils unter zumindest einen Abschnitt des Basisteils bewegt. Bevorzugt ist die Schnittstelle so eingerichtet, dass zumindest eine seitliche Bewegung des Anbauteils relativ zum Basisteil insbesondere formschlüssig blockiert ist. So kann ein Abrutschen des Anbauteils verhindert werden. Ein Entfernen des Anbauteils vom Basisteil mit einer nach oben gerichteten Bewegung des Anbauteils ist typischerweise möglich, sofern das Anbauteil nicht mit dem Basisteil verriegelt ist. Typischerweise ist die Schnittstelle dazu eingerichtet, unterschiedliche Anbauteile an das Basisteil zu koppeln.

Die Schnittstelle kann zudem dem Ansteuern des Anbauteils bzw. von Funktionskomponenten des Anbauteils für eine Speisenzubereitung dienen. Die Schnittstelle kann unterschiedliche Funktionen aufweisen, die unterschiedliche Bereiche eines Anbauteils und ggf. eines Funktionsmoduls ansteuern können.

Die Küchenmaschine ist dazu eingerichtet, die Art des Anbauteils zu erkennen. Eine Steuerungseinrichtung der Küchenmaschine kann dazu eingerichtet sein, eine Information bezüglich der Art des Anbauteils zu empfangen.

Das Erkennen einer Art oder eines Typs des Anbauteils kann eine Einordnung in eine Produktklasse umfassen. Beispielsweise kann erkannt werden, dass es sich um einen Topf, eine Pfanne oder eine Rührschüssel handelt. Es kann auch erkannt werden, ob es sich um einen Topf mit kleinem oder großem Volumen handelt. Insbesondere umfasst das Erkennen der Art die Identifikation eines vordefinierten Produkttyps. Dies kann die Kenntnis bestimmter Eigenschaften des Produkts ermöglichen, wie beispielsweise bei dem Topf verfügbare Funktionskomponenten, mit dem Topf ausführbare Speisenzubereitungsprozesse und/oder von Eigenschaften des Topfes, wie beispielsweise eine maximale Temperatur, auf die der Topf erhitzt werden darf, die maximale Drehzahl des angebrachten Werkzeuges oder ein maximaler Druck im Inneren des Topfes. In einer Ausführungsform kann jedes individuelle Anbauteil anhand einer eindeutigen Identifikation erkannt werden.

Die Küchenmaschine beeinflusst die Funktion der Schnittstelle, um das Anbauteil für eine Speisenzubereitung zu betreiben. Beispielsweise veranlasst die Küchenmaschine, insbesondere eine Steuerungseinrichtung, ein Drehen eines Betätigungsteils oder einer Welle oder ein Ansteuern eines oder mehrerer elektrischen Kontakte, um Daten und/oder Energie zu übertragen. Auf diese Weise können Funktionskomponenten des Anbauteils für eine Speisenzubereitung betrieben werden.

Die Küchenmaschine kann automatisch die Funktion der Schnittstelle als Reaktion auf die erkannte Art des Anbauteils anpassen. Insbesondere muss der Benutzer dafür nicht tätig werden. Beispielsweise kann die Küchenmaschine erkennen, dass ein Gefäß mit einem Werkzeug in Form eines Messers mit dem Basisteil gekoppelt ist, auf dem ein Deckel angeordnet und verriegelt ist. In dem Fall kann die Küchenmaschine eine Drehung der Welle mit hoher Drehgeschwindigkeit freischalten, etwa um eine feste Speise zu zerkleinern. Wird dagegen erkannt, dass eine Pfanne ohne drehbares Werkzeug mit dem Basisteil gekoppelt ist, wird der Motor zum Drehen der Welle ausgeschaltet.

Insbesondere ist die Küchenmaschine dazu eingerichtet, ein Vorhandensein eines Anbauteils zu prüfen und ggf. in Abhängigkeit von dem Ergebnis der Prüfung eine Funktion der Schnittstelle zu beeinflussen. Die Küchenmaschine kann so eingerichtet sein, dass die Prüfung bei einem oder jedem Start der Küchenmaschine erfolgt. So kann beispielsweise ein Drehen der Welle deaktiviert sein, solange kein Anbauteil oder kein Anbauteil mit drehbarem Werkzeug gekoppelt ist. Typischerweise wird erst geprüft, ob ein Anbauteil vorhanden ist, und wenn ja, anschließend die Art des Anbauteils erkannt.

In einer Ausführungsform umfasst die Schnittstelle ferner eine drehbare Welle zum Antreiben eines drehbaren Werkzeugs des Anbauteils. Das Basisteil umfasst insbesondere einen Motor zum Drehen der Welle. Die Welle weist typischerweise eine nicht kreisförmige Kontur auf, insbesondere an der Oberseite, die mit einer korrespondieren Kontur am Anbauteil drehfest verbunden werden kann. Das Anbauteil kann eine Verbindungswelle aufweisen, um die Rotation der Welle des Basisteils auf das Werkzeug zu übertragen. Die Verbindungswelle kann eine nicht kreisförmige Kontur aufweisen, insbesondere an der Unterseite des Anbauteils, die mit der korrespondierenden Kontur der Welle am Basisteil drehfest verbindbar ist.

Die Welle kann eine Funktion der Schnittstelle sein, die in Abhängigkeit von der erkannten Art des Anbauteils beeinflusst werden kann. Beispielsweise kann ein Topf erkannt werden, der keinen Deckel aufweist und/oder nur für geringe Drehgeschwindigkeiten ausgelegt ist. In dem Fall kann die Küchenmaschine die Schnittstelle so steuern, dass die drehbare Welle nicht schneller als eine vordefinierte maximale Drehgeschwindigkeit gedreht wird.

In einer Ausgestaltung umfasst die Schnittstelle ein drehbares Betätigungsteil zum Ausführen einer Funktion, insbesondere beim Anbauteil. Eine Funktion kann in einem Durchführen, Betätigen, Ansteuern oder Auslösen einer Funktion, beispielsweise einer Funktionskomponente eines Anbauteils oder eines damit verbundenen Funktionsmoduls bestehen. Eine mögliche Funktion beim Anbauteil kann beispielsweise das insbesondere formschlüssige Verriegeln des Anbauteils mit dem Basisteil sein. Das Anbauteil kann im verriegelten Zustand nicht von dem Basisteil entfernt werden. Ferner kann eine Funktion des Anbauteils ausgelöst werden, wie z. B. ein Öffnen oder Schließen eines Ventils am Anbauteil. Eine weitere mögliche Funktion kann darin bestehen, ein bewegliches Teil des Anbauteils wie z. B. eine Übertragungseinrichtung zu bewegen. Die Übertragungseinrichtung kann ihrerseits eine Funktion ausführen, beispielsweise ein Funktionsmodul auf dem Anbauteil verriegeln oder eine Funktion des Funktionsmoduls steuern, etwa am Funktionsmodul ein Ventil öffnen oder schließen oder einen Schalter oder Knopf betätigen. Eine Funktion kann auch darin bestehen, ein Sperrelement zu bewegen, um eine Bewegung eines anderen Teils freizugeben oder zu sperren. Prinzipiell kann die Drehbewegung des Betätigungsteils direkt zum Ausführen der Funktion genutzt werden und/oder es kann zu diesem Zweck eine einfache oder mehrmalige Umwandlung in eine andere Bewegung erfolgen, die beispielsweise linear sein kann oder eine Drehbewegung um eine andere Drehachse sein kann.

Grundsätzlich kann eine Funktion auch darin bestehen, ein Zubehörteil wie z. B. ein drehbares Werkzeug im Anbauteil zu drehen, beispielsweise in eine oszillierende Bewegung zu versetzen oder durch oszillierende Bewegungen in eine schrittweise Drehung in eine Drehrichtung zu versetzen. Dies kann unabhängig von einer angetriebenen Welle des Basisteils zum Antreiben eines drehbaren Werkzeugs erfolgen.

In einer Ausgestaltung umfasst das Basisteil einen Aktuator zum Antrieb des Betätigungsteils. Der Aktuator ist insbesondere elektrisch betrieben und kann als Elektromotor ausgestaltet sein, z. B. als Stellmotor. Der Aktuator ist insbesondere unterhalb der Aufnahme und/oder des Anbauteils angeordnet. Der Aktuator dient dazu, das Betätigungsteil zu drehen und so automatisiert die beschriebene Funktion oder Funktionen auszuführen.

Insbesondere ist die Küchenmaschine dazu eingerichtet, den Aktuator abhängig von der erkannten Art des Anbauteils zu steuern, um eine Position oder Bewegung des Betätigungsteils zu beeinflussen. Mit anderen Worten ist der Aktuator bzw. der Antrieb des Betätigungsteils eine Funktion der Schnittstelle, die beeinflusst oder gesteuert werden kann. So kann eine Position des Betätigungsteils in Abhängigkeit der Art des Anbauteils eingestellt werden. Beispielsweise kann erkannt werden, dass das Anbauteil ein mit dem Basisteil verriegelbares Speisenzubereitungsgefäß ist und dass ein Drehen aus einer Ausgangslage um einen bestimmten Winkel in eine bestimmte Richtung das Speisenzubereitungsgefäß mit dem Basisteil verriegelt. Der Aktuator kann dahingehend gesteuert werden, dass das Betätigungsteil die beschriebene Drehung durchführt, wenn eine Verriegelung gewünscht oder benötigt ist.

In einer Ausführungsform umfasst die Küchenmaschine eine Steuerungseinrichtung, die dazu eingerichtet ist, den Aktuator zu steuern. Die Steuerungseinrichtung kann abhängig von der Art des Anbauteils eine Position und/oder Bewegung des Betätigungsteils steuern. Insbesondere ist die Steuerungseinrichtung dazu eingerichtet, gezielt bestimmte Drehpositionen des Betätigungsteils anzufahren.

In einer Ausgestaltung weist das Betätigungsteil mindestens ein Kontaktelement auf. Das Kontaktelement kann der formschlüssigen Verriegelung des Anbauteils mit dem Basisteil dienen. Insbesondere kontaktiert das Kontaktelement ein korrespondierendes Element des Anbauteils. Insbesondere wird auf diese Weise im verriegelten Zustand ein Anheben des Anbauteils in axialer und/oder vertikaler Richtung formschlüssig verhindert. In einer ergänzenden oder alternativen Ausführungsform dient das Kontaktelement der Übertragung der Drehbewegung und/oder Kraft des Betätigungsteils an eine Komponente des Anbauteils. Das Anbauteil weist insbesondere ein korrespondierendes Element auf, welches das Kontaktelement des Betätigungsteils kontaktiert von diesem bewegt und/oder mit der Kraft beaufschlagt wird.

Insbesondere ragt das Kontaktelement in radialer Richtung von der benachbarten Struktur des Betätigungsteils ab, beispielsweise nach außen. Insbesondere sind mehrere, beispielsweise drei Kontaktelemente vorhanden, die über den Umfang verteilt sein können.

Das Betätigungsteil ist um eine Drehachse drehbar. In einer Ausführungsform ist das Betätigungsteil um eine zumindest im Wesentlichen vertikale Achse drehbar und/oder um eine Drehachse, die parallel zu einer Drehachse einer Welle zum Antreiben des Werkzeugs zur Speisenzubereitung ausgerichtet ist. Dies erlaubt besonders vorteilhaft eine parallele Ausrichtung der Drehachsen. Beispielsweise kann so eine Verriegelung des Anbauteils von unten erfolgen. Besonders bevorzugt haben das Betätigungsteil und die Welle dieselbe Drehachse. In einer Ausführungsform ist das Betätigungsteil ringförmig, beispielsweise kreisringförmig ausgestaltet, typischerweise in Bezug zur Drehachse. Mit anderen Worten ist ein Raum im radial Inneren des Betätigungsteils frei. Dies ermöglicht, dort eine oder mehrere andere Komponenten des Basisteils oder der Küchenmaschine unterzubringen, beispielsweise eine Welle zum Antreiben eines Werkzeugs zur Speisenzubereitung.

In einer Ausgestaltung umfasst die Schnittstelle mehrere elektrische Kontakte zur Übertragung von Daten und/oder elektrischer Energie zwischen dem Basisteil und dem Anbauteil. Die elektrischen Kontakte dienen insbesondere der elektrisch leitfähigen Verbindung mit dem Anbauteil. Insbesondere umfasst das Anbauteil zumindest einen, typischerweise mehrere korrespondierende elektrische Kontakte. Eine Funktion der Schnittstelle, die in Abhängigkeit von der erkannten Art des Anbauteils beeinflusst werden kann, sind hierbei die elektrischen Kontakte.

Elektrische Energie umfasst elektrische Spannung und elektrischen Strom. Die Übertragung kann dem Senden von Daten und/oder elektrischem Strom vom Basisteil an das Anbauteil dienen. Die Übertragung kann dem Empfangen von Daten und/oder elektrischem Strom vom Anbauteil durch das Basisteil dienen. Beispielsweise kann Strom bereitgestellt werden, um eine Heizeinrichtung oder einen Sensor im Anbauteil oder in einem Funktionsmodul zu betreiben. Beispielsweise können Daten eines Sensors und/oder durch das Anbauteil weitergeleitete Daten eines Funktionsmoduls weitergeleitet werden.

Falls sowohl elektrischer Strom als auch Daten übertragen werden sollen, kann ein elektrischer Kontakt grundsätzlich für beide Funktionen verwendet werden, ggf. auch gleichzeitig. Es können aber auch unterschiedliche elektrische Kontakte für Strom und Daten vorhanden sein. Es können einerseits ein oder mehrere Leistungskontakte zur elektrischen Versorgung von Funktionskomponenten wie z. B. einer Heizung und andererseits ein oder mehrere Datenkontakte zum Übertragen von Daten vorhanden sein. Datenkontakte können allerdings auch dazu eingerichtet sein, elektronische Komponenten wie eine Mikroelektronik oder einen Sensor elektrischer Energie zu versorgen.

In einer Ausgestaltung ist die Küchenmaschine dazu eingerichtet, abhängig von der erkannten Art des Anbauteils die Verwendung zumindest eines elektrischen Kontakts zu steuern. Die Verwendung eines elektrischen Kontakts kann umfassen, ob ein bestimmter Kontakt angesteuert wird. Beispielsweise kann ein erster Anbauteiltyp alle elektrischen Kontakte verwenden, während ein zweiter Anbauteiltyp zumindest einen elektrischen Kontakt nicht verwendet. Die Küchenmaschine beeinflusst die Schnittstelle dann so, dass keine elektrische Energie und keine Daten an den nicht verwendeten Kontakt gesendet werden und keine elektrische Energie und keine Daten von dem nicht verwendeten Kontakt empfangen werden.

Beispielsweise kann ein erstes Speisenzubereitungsgefäß zwei unabhängige Heizeinrichtungen aufweisen, die über drei elektrische Kontakte mit Strom versorgt werden. Ein zweites Speisenzubereitungsgefäß kann nur eine Heizeinrichtung aufweisen, die über zwei elektrische Kontakte mit Strom versorgt werden. Detektiert die Küchenmaschine, dass ein zweites Speisenzubereitungsgefäß vorhanden ist, wird ein bestimmter elektrischer Kontakt nicht verwendet. Bevorzugt hat die Küchenmaschine Zugriff auf die Information, welche Kontakte verwendet werden und/oder nicht verwendet werden.

Die Verwendung eines elektrischen Kontakts kann umfassen, wie ein bestimmter Kontakt angesteuert wird. Beispielsweise kann ein drittes Speisenzubereitungsgefäß eine Heizeinrichtung aufweisen, die ein Erhitzen einer im Speisenzubereitungsgefäß befindlichen Speise lediglich bis 40°C erlaubt. In diesem Fall werden zwar dieselben Kontakte für denselben Zweck, nämlich zum Anlegen eines elektrischen Stroms, benötigt wie bei dem zweiten Speisenzubereitungsgefäß, aber der elektrische Strom ist auf eine geringe Stromstärke limitiert. Die Küchenmaschine begrenzt dann also den anzulegenden Strom auf einen voreingestellten Wert, der der erlaubten Erhitzen entspricht.

In einer Ausgestaltung umfasst die Küchenmaschine einen Positionssensor zur Detektion einer Drehposition des Betätigungsteils. Der Positionssensor ist insbesondere am Basisteil angeordnet. Insbesondere ist der Positionssensor dazu eingerichtet, zumindest die aktuelle Drehposition zu ermitteln. Bevorzugt ist der Positionssensor dazu eingerichtet, jede beliebige Drehposition des Betätigungsteils zu ermitteln. Das bedeutet, dass nicht nur punktuelle Positionen ermittelt werden können, wie dies beispielsweise bei Endanschlägen der Fall ist. In dem Winkelbereich, in dem das Betätigungsteil drehbar ist, kann insbesondere jede Drehposition ermittelt werden. Die Drehposition des Betätigungsteils erlaubt eine sehr genaue Aussage über die auszuführende Funktion. Beispielsweise ist bei einem bestimmten Anbauteil oder Funktionsmodul in einem bestimmten Winkelbereich eine Aktivstellung vorgesehen, bei der eine bestimmte Funktion aktiv ist, und in einem anderen Winkelbereich ist eine Passivstellung vorgesehen, bei der eine bestimmte Funktion nicht aktiv ist. Anhand der ermittelten Drehposition ist damit unmittelbar ersichtlich, ob eine bestimmte Funktion aktiv ist. Die Küchenmaschine kann so ausgestaltet sein, dass eine gewünschte Funktion wie etwa ein Zerkleinern einer Speise mit einem Zerkleinerungswerkzeug erst im Anschluss an die Detektion einer bestimmten Position erfolgt, die beispielsweise einen verriegelten Zustand des Anbauteils mit dem Basisteil anzeigt. Insbesondere ist das Basisteil so ausgestaltet, dass der Positionssensor oder eine mit dem Positionssensor verbundene Steuerungseinrichtung ein Signal ausgibt, wenn der Positionssensor ein Erreichen einer vordefinierten Drehposition erfasst. So kann das Erreichen einer gewünschten Drehposition überwacht werden und die Speisenzubereitung besonders rasch und sicher erfolgen.

In einer Ausgestaltung ist der Positionssensor dazu eingerichtet, eine absolute Drehposition des Betätigungsteils zu detektieren. Damit stellt der Positionssensor eine tatsächliche physische Drehposition des Betätigungsteils innerhalb des möglichen Winkelbereichs zur Verfügung.

In einer Ausführungsform weist der Positionssensor ein mit dem Betätigungsteil verbundenes Geberelement und eine am Basisteil angeordnete Detektionseinrichtung auf. Die Detektionseinrichtung kann die Position des Geberelements detektieren. Das Geberelement ist beispielsweise ein metallisches Element.

Das Geberelement kann sich mit dem Betätigungsteil drehen. Es findet insbesondere keine relative Drehung zwischen dem Geberelement und dem Betätigungsteil statt. Die Drehposition des Geberelements erlaubt somit einen präzisen und eindeutigen Rückschluss auf die Drehposition des Betätigungsteils, ohne dass Toleranzen wie etwa bei verbundenen Teilen eines Getriebes die Genauigkeit beeinträchtigen könnten. Insbesondere ist die Detektionseinrichtung an einem nicht drehenden Teil des Basisteils angeordnet, sodass sich das Geberelement relativ zur Detektionseinrichtung dreht. Es findet keine relative Drehung zwischen der Detektionseinrichtung und einem Gehäuse des Basisteils statt. In einer Ausführungsform weist die Detektionseinrichtung eine um die Drehachse des Betätigungsteils gebogene Form auf. Insbesondere ist die Detektionseinrichtung kreisbogenförmig. Dies ermöglicht einen möglichst gleichmäßigen Abstand zwischen Geberelement und Detektionseinrichtung unabhängig von der Drehposition. Insbesondere erstreckt sich die Detektionseinrichtung über den gesamten Winkelbereich, um den das Betätigungsteil gedreht werden kann. Insbesondere ist die Detektionseinrichtung eine induktive Detektionseinrichtung.

Insbesondere ist die Küchenmaschine dazu eingerichtet, zu prüfen, ob das Betätigungsteil sich in einer Ausgangsposition befindet und/oder in welcher Drehposition sich das Betätigungsteil befindet. Die Ausgangsposition des Betätigungsteils kann erforderlich sein, um ein Anbauteil mit dem Basisteil zu koppeln. Die Küchenmaschine kann so eingerichtet sein, dass die Prüfung bei einem oder jedem Start der Küchenmaschine erfolgt. Ist das Betätigungsteil in einer abweichenden Drehposition, kann das Betätigungsteil in die Ausgangsposition gedreht werden. Die Prüfung kann auch dann erfolgen, wenn die Küchenmaschine erkennt, dass eine bestimmte Art des Anbauteils vorhanden ist. Es kann für eine bestimmten Betrieb einer Funktionskomponente eine bestimmte Drehposition des Betätigungsteils erforderlich sein, beispielsweise die Ausgangsposition oder eine - insbesondere der Küchenmaschine in Abhängigkeit der Art des Anbauteils bekannte - bestimmte Position, die einen bestimmten Zustand wie z. B. eine Verriegelung anzeigt.

In einer Ausgestaltung weist die Schnittstelle eine Empfangseinheit zum Empfang von Informationen zwecks Erkennung der Art des Anbauteils auf. Insbesondere umfasst die Empfangseinheit wenigstens einen elektrischen Kontakt einer Schnittstelle, insbesondere einer Datenschnittstelle. In diesem Fall werden die Informationen über einen elektrischen Kontakt, der lediglich für den Empfang und ggf. zudem zum Senden von Daten eingerichtet ist, empfangen.

Insbesondere umfasst das Anbauteil eine Identifikation. Beispielsweise kann eine elektrisch oder elektronisch gespeicherte und/oder digitale Identifikation vorhanden sein, etwa in Form einer eindeutigen Nummer. Das Anbauteil kann einen Datenspeicher und/oder eine Steuerungseinheit aufweisen. Insbesondere umfasst das Anbauteil eine korrespondierende Einheit, die mit der Empfangseinheit der Schnittstelle datentechnisch gekoppelt werden kann. Die Empfangseinheit kann dann bevorzugt Daten zur Art und ggf. zur Identität des Anbauteils empfangen. Die Übertragung kann z. B. analog oder digital erfolgen.

Die Empfangseinheit kann über eine insbesondere digitale Datenschnittstelle verfügen. Die Datenschnittstelle ist speziell zum Übertragen von Daten vorgesehen. Ein Leistungskontakt, etwa um Strom zum Betreiben eines Funktionsmoduls bereitzustellen, ist kein Kontakt einer Datenschnittstelle. Bevorzugt kann eine Steuerungseinrichtung die Daten des Sensors empfangen und auf dieser Basis die Funktion der Schnittstelle beeinflussen. Die Empfangseinheit und dementsprechend die Einheit am Anbauteil können als Funkeinheiten ausgeführt sein. Insbesondere umfasst die Empfangseinheit wenigstens einen elektrischen Kontakt. Auf diese Weise können Daten einfach und fehlerfrei übertragen werden.

In einer Ausgestaltung hat das Basisteil Zugriff auf Eigenschaften der erkannten Art des Anbauteils. Insbesondere ist das Basisteil dazu eingerichtet, die Funktion der Schnittstelle abhängig von den Eigenschaften des Anbauteils zu steuern. Die Küchenmaschine kann eine Steuerungseinrichtung aufweisen, die Zugriff auf die Eigenschaften hat. Die Eigenschaften können Eigenschaften des erkannten Art des Anbauteils sein. Die Eigenschaften können Eigenschaften eines konkreten erkannten Anbauteils sein. Die Eigenschaften können als Grundlage für die Steuerung der Schnittstelle verwendet werden.

Beispielsweise hat die Küchenmaschine Zugriff auf Informationen, in denen spezifiziert ist, welche Funktion oder Funktionen der Schnittstelle verwendet werden und insbesondere wie diese Funktion oder Funktionen verwendet werden. So kann beispielsweise ein Datensatz, z. B. eine Tabelle, verfügbar sein, in der für jede Art Anbauteil hinterlegt ist, ob und/oder wie einer oder mehrere der elektrischen Kontakte, des Betätigungsteils und der Welle verwendet wird. Die Informationen, z. B. der Datensatz können in der Küchenmaschine bzw. im Basisteil gespeichert sein, etwa in einer Firmware, ins Basisteil eingegeben oder von einem mobilen Gerät empfangen worden sein, über ein Netzwerk heruntergeladen oder verfügbar sein, im Anbauteil selbst gespeichert und von dort ggf. zum Basisteil übertragen worden sein.

Die Eigenschaften eines Anbauteils können z. B. eine, mehrere oder alle der Folgenden umfassen: mögliche Speisenzubereitungsarten; kann verriegelt werden; wie kann verriegelt werden (z. B. Drehrichtung und/oder Drehwinkel des Betätigungsteils); Volumen, Fläche, Vorhandensein, Anzahl und Art von Heizeinrichtungen; Vorhandensein, Anzahl und Art von Sensoren; Vorhandensein eines drehbaren Werkzeugs; Funktionen des Werkzeugs, ggf. in Abhängigkeit von Drehrichtung und/oder Drehgeschwindigkeit; Möglichkeit zur Kopplung mit Funktionsmodulen; welche Funktionsmodule können gekoppelt werden; kann ein Funktionsmodul verriegelt werden; welche Funktionen eines Funktionsmoduls können gesteuert werden; wie können Funktionen des Funktionsmoduls gesteuert werden (z. B. Drehrichtung und/oder Drehwinkel des Betätigungsteils); etc.

Die Steuerungseinrichtung kann dann beispielsweise nur die bei dem erkannten Anbauteil relevanten elektrische Kontakte der Schnittstelle ansteuern, nur die vorgesehene Drehung des Betätigungsteils oder der Welle durchführen, etc. Alle nicht vorhandenen oder nicht genutzten elektrischen Kontakte der Schnittstelle werden dann nicht angesteuert. Nicht vorgesehene Drehrichtungen oder Drehgeschwindigkeiten Betätigungsteils werden nicht ausgeführt.

In einer Ausführungsform umfasst die Küchenmaschine das Anbauteil. In einer Ausgestaltung ist das Anbauteil ein Speisenzubereitungsgefäß. In einer Ausgestaltung weist das Anbauteil eine Schnittstelle zur mechanischen Kopplung mit einem Funktionsmodul auf. Die Schnittstelle befindet sich insbesondere an der Oberseite des Anbauteils. Das Funktionsmodul ist insbesondere dazu eingerichtet, von oben auf oder in das Anbauteil gesetzt zu werden. Die Küchenmaschine kann das Funktionsmodul umfassen.

Ein Funktionsmodul ist ein Teil, welches zusammen mit dem Anbauteil verwendet wird und eine bestimmte Funktion erfüllt. Ein Funktionsmodul kann ein Abdeckteil sein, welches das Anbauteil zumindest teilweise abdeckt. Ein Funktionsmodul kann beispielsweise ein Deckel sein, der ggf. vor einem Hereingreifen und/oder einem Spritzen schützt. Ein Funktionsmodul kann dazu eingerichtet sein, einen oder mehrere bestimmte Prozesse der Speisenzubereitung auszuführen. Ein Funktionsmodul kann ein Zerkleinerungsteil zum Zerkleinern einer Speise sein. Ein Funktionsmodul kann beispielsweise eine Schneideinheit, etwa in Form einer Schneidscheibe, eine Reibscheibe oder ein Entsafter bzw. ein Entsafteraufsatz sein. Das Funktionsmodul kann einteilig oder mehrteilig sein. Ein Zerkleinerungsaufsatz kann beispielsweise einen Auffangkorb, ein Zerkleinerungswerkzeug, eine Verbindungswelle und einen Deckel umfassen. Das Anbauteil allein oder gemeinsam mit dem Funktionsmodul kann eine Popcornmaschine bilden.

Insbesondere sind unterschiedliche Funktionsmodule vorhanden, die jeweils mit einem oder mehreren unterschiedlichen Anbauteilen kombiniert werden können. Insbesondere sind die Schnittstellen der unterschiedlichen Anbauteile einander korrespondierend geformt. Insbesondere weist jedes Funktionsmodul eine korrespondierende Schnittstelle auf, um mit der Schnittstelle des jeweiligen Anbauteils gekoppelt zu werden. Die mechanische Kopplung kann eine kraft- und/oder formschlüssige Kopplung sein. Zumindest quer zur axialen Richtung findet typischerweise eine formschlüssige Kopplung statt. Das Funktionsmodul kann dann zwar noch nach oben abgenommen werden, aber nicht seitlich verrutschen. Es kann möglich sein, das Funktionsmodul am Anbauteil zu verriegeln, z. B. mit der Übertragungseinrichtung des Anbauteils. In einer Verriegelungsstellung kann dann eine insbesondere formschlüssige Verriegelung herstellt werden, so dass das Funktionsmodul nicht mehr vom Anbauteil abgenommen werden kann.

In einer Ausgestaltung ist die Küchenmaschine dazu eingerichtet, ein Vorhandensein und/oder eine Art des Funktionsmoduls zu erkennen. Insbesondere ist die Küchenmaschine dazu eingerichtet, abhängig von dem erkannten Vorhandensein und/oder der erkannten Art eine Funktion der Schnittstelle zu beeinflussen. Analog zur Art des Anbauteils kann hierbei auch die Art des Funktionsmoduls dazu dienen, die Funktion der Schnittstelle zu beeinflussen. Das oben für die Beeinflussung der Schnittstelle Gesagte gilt hier analog. Zudem kann auch die Information, dass kein Funktionsmodul vorhanden ist, die Funktion der Schnittstelle beeinflussen. So kann etwa eine Drehung eines drehbaren Werkzeugs bei erkannter Abwesenheit eines Deckels auf einem Speisenzubereitungsgefäß auf eine geringe Drehzahl begrenzt oder sogar verhindert werden.

Die Küchenmaschine kann mit den verfügbaren Informationen insbesondere einen bestimmten Betrieb einer bestimmten Funktionskomponente freigeben, mit mindestens einem veränderten Parameter freigeben oder sperren. Beispielsweise kann als Parameter eine geänderte Drehzahl, Drehrichtung oder Temperatur einer Heizeinrichtung verwendet werden.

Insbesondere umfasst die Küchenmaschine, bevorzugt das Anbauteil, mindestens eine Empfangseinheit zum Empfang von Informationen zwecks Erkennung der Art des Funktionsmoduls. In einer Ausführungsform umfasst die Empfangseinheit mindestens einen Sensor zum Erkennen der Art des Funktionsmoduls. Der Sensor kann dazu eingerichtet sein, ein Magnetfeld zu detektieren. Beispielsweise kann mindestens ein Hall-Sensor verwendet werden, insbesondere ein 3D-Hall-Sensor. Auf diese Weise kann der dreidimensionale Vektor der magnetischen Flussdichte gemessen werden. Am Funktionsmodul können ein oder mehrere Magnete angeordnet sein, mit denen die Art des Funktionsmoduls codiert sein kann. Insbesondere werden zwei oder mehr Magnete verwendet. Insbesondere werden zwei oder mehr Hall-Sensoren verwendet. Für einige Anwendungen kann auch ein Hall-Sensor genügen.

Alternativ kann ein beliebiger anderer geeigneter Sensor verwendet werden. Z. B. kann in jedem Funktionsmodul ein elektrischer Widerstand angeordnet sein, der beispielsweise über elektrische Kontakte am Funktionsmodul ausgelesen werden kann. Jede Art Funktionsmodul hat dabei einen charakteristischen Widerstand, anhand dessen die Küchenmaschine die Art identifizieren kann. Typischerweise weist das Anbauteil dann geeignete elektrische Kontakte auf, um im gekoppelten Zustand des Funktionsmoduls eine elektrische Verbindung vom Funktionsmodul zum Basisteil herzustellen und/oder um den Widerstand abzufragen.

Ebenso ist es möglich, Daten über die Art des Funktionsmoduls zu empfangen. Z. B. kann ein Near-Field-Communication- oder Bluetooth-Sender im Funktionsmodul angeordnet sein und ein entsprechender Empfänger in der Küchenmaschine. Auch kann eine im Funktionsmodul gespeicherte Identifikation vom Anbauteil oder vom Basisteil ausgelesen werden, analog zur oben beschriebenen Identifikation des Anbauteils, die hier entsprechend gilt.

Die Empfangseinheit dient der Erkennung der Art des Funktionsmoduls. Die Empfangseinheit kann dazu eingerichtet sein, ein elektrisches Signal auszugeben, welches die Art des Funktionsmoduls codiert. Bevorzugt befindet sich die Empfangseinheit am Anbauteil. Insbesondere ist eine Datenverbindung zwischen dem Anbauteil und dem Basisteil herstellbar oder vorhanden, über die das elektrische Signal zu einer Steuerungseinrichtung im Basisteil geleitet werden kann. Die Datenverbindung kann kabelgebunden oder kabellos sein. Ein Abschnitt der Datenverbindung kann durch ein oder mehrere elektrische Kontakte ausgebildet sein, die Teil der Schnittstelle sind. Eine Empfangseinheit kann grundsätzlich auch am Basisteil angeordnet sein. Beispielsweise können entsprechende Signal durch das Anbauteil zum Basisteil geleitet werden.

In einer Ausführungsform ist die Küchenmaschine so ausgebildet, dass eine Funktion der Schnittstelle eine Aktion beim Funktionsmodul durchführt. In einer Ausgestaltung weist das Anbauteil eine insbesondere mechanische Übertragungseinrichtung zum Übertragen einer Kraft und/oder Bewegung des Betätigungsteils auf, insbesondere zwecks Ausführung einer Funktion beim Funktionsmodul. Die Übertragungseinrichtung kann dann ein Element aufweisen, welches mit dem Kontaktelement des Betätigungsteils zusammenwirkt. Die Übertragungseinrichtung kann dazu eingerichtet sein, ihrerseits die Bewegung an das Funktionsmodul weiterzugeben. Dazu können auch die Übertragungseinrichtung und das Funktionsmodul korrespondierende Kontaktelemente aufweisen. Die Funktion beim Funktionsmodul umfasst beispielsweise eine Bewegung einer Komponente des Funktionsmoduls. Die Bewegung der Komponente kann unterschiedliche Folgen haben, beispielsweise ein Öffnen oder Schließen einer Öffnung oder eines Ventils, ein Anzeigen eines Zustands, etc. Die Übertragungseinrichtung kann beispielsweise drehbar sein, insbesondere um dieselbe Drehachse wie das Betätigungsteil.

Alternativ oder ergänzend kann die Übertragungseinrichtung selbst eine Funktion ausführen. Die Übertragungseinrichtung kann an der Oberseite ein Verriegelungselement aufweisen, mit dem das Funktionsmodul am Anbauteil verriegelt werden kann. Beispielsweise weist die Übertragungseinrichtung und/oder das Funktionsmodul ein oder mehrere Formschlusselemente auf. Das jeweilig andere Teil ist so geformt, dass es in einer geeigneten relativen Drehposition zwischen der Übertragungseinrichtung und dem Funktionsmodul, die als Verriegelungsstellung bezeichnet wird, mit den Formschlusselementen in Eingriff steht und eine formschlüssige Verriegelung herstellt. So kann das Funktionsmodul nicht mehr vom Anbauteil abgenommen werden. In einer anderen Drehposition, der Freigabestellung, ist die Verriegelung gelöst und das Funktionsmodul kann insbesondere manuell abgenommen werden. Es können auch ein oder mehrere Formschlusselemente am Funktionsmodul angeordnet sein. Grundsätzlich kann auch eine kraftschlüssige Verriegelung erfolgen, beispielsweise unter Ausübung von Kraft auf ein Gummi- oder Federelement.

Die Übertragungseinrichtung kann zwischen einer Innenwand des Anbauteils und einer Außenwand des Anbauteils angeordnet sein. Es kann zwischen der Innenwand und der Außenwand ferner eine Wärmeisolierung vorhanden sein oder die Außenwand kann als Wärmeisolierung ausgestaltet sein. Es kann vorgesehen sein, dass das Anbauteil nur dann mit dem Basisteil gekoppelt werden kann, wenn die Übertragungseinrichtung sich in der Ausgangsposition befindet. Es kann ein Vorspannelement, beispielsweise umfassend eine oder mehrere Federn, vorhanden sein, um die Übertragungseinrichtung in eine Ausgangsposition vorzuspannen. So kann sichergestellt werden, dass das Anbauteil stets ohne Weiteres mit dem Basisteil gekoppelt werden kann.

In einer Ausgestaltung sind das Basisteil und das Anbauteil so eingerichtet, dass das Anbauteil in einer Ausgangsposition des Betätigungsteils mechanisch mit dem Basisteil koppelbar ist. Das Anbauteil kann dann z. B. auf das Basisteil aufgesetzt und insbesondere manuell entfernt werden. In einer Ausgestaltung sind das Basisteil und das Anbauteil so eingerichtet, dass das Anbauteil in einer von der Ausgangsposition verschiedenen zweiten Drehposition des Betätigungsteils mit dem Basisteil verriegelt ist. Die Verriegelung erfolgt insbesondere wie beschrieben über das Kontaktelement des Betätigungsteils. In dieser Position kann das Anbauteil typischerweise weder auf das Basisteil aufgesetzt noch von diesem entfernt werden.

Insbesondere sind das Basisteil und das Anbauteil so eingerichtet, sich in einer von der Ausgangsposition sowie der zweiten Drehposition verschiedenen dritten Drehposition des Betätigungsteils mindestens ein mit der Übertragungseinrichtung in Wirkverbindung stehendes Verriegelungselement des Anbauteils in einer Verriegelungsposition befindet, um ein Funktionsmodul zu verriegeln. Alternativ kann in der dritten Drehposition eine andere Aktion beim Funktionsmodul durchgeführt werden. Insbesondere werden die Ausgangsposition, die erste Drehposition und die zweite Drehposition in dieser Reihenfolge nacheinander durchlaufen. Wird das Betätigungsteil von der Ausgangsposition in eine Drehrichtung gedreht, erfolgt die Verriegelung des Anbauteils. Wird in die Drehrichtung weitergedreht, erfolgt die Verriegelung des Funktionsmoduls oder die andere Aktion. Zuvor und/oder dazwischen können eine oder mehrere weitere Aktionen erfolgen.

In einer Ausgestaltung ist die Küchenmaschine so eingerichtet, dass sie bei einem Fehlversuch, das Betätigungsteil in eine gewünschte Position zu drehen, eine vorbestimmte Aktion ausführt. Die vorbestimmte Aktion ist insbesondere von der erkannten Art des Anbauteils und/oder des Funktionsmoduls abhängig. Beispielsweise kann eine Drehung des Betätigungsteils in eine Verriegelungsposition nicht möglich sein, z. B. aufgrund eines falsch aufgesetzten Anbauteils oder Funktionsmoduls, aufgrund von Verschmutzung oder aufgrund eines Schadens. Die Küchenmaschine führt dann eine vorbestimmte Aktion aus. Beispielsweise kann ein gewünschter Betrieb gesperrt werden, ein Betrieb mit zumindest einem veränderten Parameter erlaubt oder ausgeführt werden und/oder eine Information an einen Benutzer ausgegeben werden. Die Aktion kann zudem abhängig von der erkannten Position und/oder von einem aktuellen Betrieb der Küchenmaschine sein. Wird ein Deckel auf einem Speisenzubereitungsgefäß erkannt und die Störung tritt beim Sperren auf, kann ein Betrieb eines Schneidwerkzeugs gesperrt oder beschränkt werden. Tritt die Störung dagegen beim Entsperren auf, kann lediglich eine Information an den Benutzer ausgegeben werden.

In einer Ausgestaltung ist die Küchenmaschine dazu eingerichtet, die Funktion der Schnittstelle in Abhängigkeit von einem aktuellen Betriebszustand der Küchenmaschine anzupassen. Insbesondere verfügt eine Steuerungseinrichtung über Informationen zum aktuellen Betrieb. Der aktuell Betrieb kann beispielsweise die Temperatur, Drehzahl, Drehrichtung, Zustand eines Anbauteils, Zustand eines Funktionsmoduls, Verriegelungszustand eines Anbauteils, Verriegelungszustand eines Funktionsmoduls und/oder vom Benutzer oder vom Rezept eingestellte bzw. vorgegebene Betriebsparameter umfassen. Der aktuelle Betrieb kann Aufschluss geben über einen aktuellen Zustand des Anbauteils oder einer Speise im Anbauteil. Werden z. B. hohe Temperaturen z.B. 95 °C erreicht wenn Kartoffeln gekocht werden, kann ein Verriegeln erforderlich sein und somit das direkte Abnehmen des Deckels gesperrt sein.

In einer Ausgestaltung ist das Funktionsmodul ein Deckel zum Abdecken des Anbauteils. In einer Ausgestaltung nimmt das Funktionsmodul im Falle einer von unten oder innen auf das Funktionsmodul wirkenden Kraft eine angehobene Position ein. Insbesondere ist ein Entriegeln des Funktionsmoduls in der angehobenen Position nicht möglich. Insbesondere ist die Küchenmaschine dazu eingerichtet, zu erkennen, ob die Art des Anbauteils und des Funktionsmoduls die angehobene Position des Funktionsmoduls ermöglichen. Insbesondere wenn dies der Fall ist, kann die Küchenmaschine dazu eingerichtet sein, nach einem Fehlversuch des Entriegelns des Funktionsmoduls eine Wartezeit einzufügen und anschließend einen erneuten Versuch zu unternehmen, das Funktionsmodul zu entriegeln. Insbesondere verfügt die Küchenmaschine über eine Information darüber, welche Bewegung notwendig ist, um das Funktionsmodul zu entriegeln.

Das Funktionsmodul kann durch die von unten auf das Funktionsmodul wirkende Kraft nach oben gedrückt werden. Die Kraft kann beispielsweise durch einen Überdruck im Anbauteil, eine Trombe im Anbauteil, also eine durch Rotation trichterförmige Flüssigkeitsoberfläche, oder eine Überfüllung des Anbauteils hervorgerufen werden. Die Kraft entsteht insbesondere im Inneren des Anbauteils und wirkt auf die Unterseite des Funktionsmoduls. Das Anbauteil und/oder das Funktionsmodul kann so beschaffen sein, dass bei Vorhandensein einer derartigen Kraft ein Entriegeln mechanisch unmöglich ist. Beispielsweise kann ein Sperrelement derart mit einer Führung zusammenwirken, dass das Sperrelement durch die veränderte Position des Funktionsmoduls gegen einen Anschlag fährt, der ein Entriegeln verhindert. Wenn die Kraft wegfällt oder unter einem Schwellwert liegt, senkt sich das Funktionsmodul wieder ab, das Sperrelement fährt am Anschlag vorbei und das Entriegeln kann erfolgen. Eine solche Mechanik kann als Drucktasche bezeichnet werden.

Die Küchenmaschine kann den Fehlversuch beispielsweise durch einen erhöhten Motorstrom in einem bestimmten Bereich der Drehposition des Betätigungsteils beim Drehen des Betätigungsteils in eine Entriegelungsposition detektieren. Die Küchenmaschine kann dann das Betätigungsteil zurück in die verriegelte Position drehen. Bei einem erneuten Versuch wird wieder in Richtung Entriegelungsposition gedreht. Dabei kann das Entriegeln erfolgen oder es kann ein erneuter Fehlversuch auftreten. Dies kann, wenn nötig, mehrfach wiederholt werden, bis die Entriegelung erfolgt. Es kann eine Wartezeit von z. B. einigen Sekunden, insbesondere mindestens 1 s und/oder höchstens 10 s vorgesehen werden. Das Anbauteil ist hierbei insbesondere kein Schnellkochtopf. Bei einem Dampfdruckkochtopf ist typischerweise ein Ventil zum Druckabbau vorhanden.

In einer Ausführungsform umfasst die Küchenmaschine eine Steuerungseinrichtung. Die Steuerungseinrichtung kann dazu eingerichtet sein, einen Speisenzubereitungsprozess unter Verwendung des Anbauteils zu steuern. Die Steuerung kann in Abhängigkeit von der erkannten Art des Anbauteils erfolgen. Die Steuerungseinrichtung kann dazu eingerichtet sein, einen oder mehrere elektrische Kontakte der Schnittstelle, das Betätigungsteil und/oder die Welle zu steuern. Die Steuerung kann beispielsweise auf Basis eines elektronisch gespeicherten Rezepts, eines vom Benutzer ausgewählten Betriebsmodus oder einer eingegebenen Instruktion eines Benutzers erfolgen. Die Steuerung kann umfassen, ob und/oder wie eine Funktion angesteuert wird. Die Steuerungseinrichtung befindet sich insbesondere im Basisteil. Vorzugsweise umfasst die Steuerungseinrichtung einen Prozessor und einen Speicher mit einem Computer-Programm-Code, d. h. auf dem Speicher speicherbare Befehle. Der Prozessor, der Speicher und der Computer-Programm-Code sind so konfiguriert, dass ein Verfahren mit mehreren Verfahrensschritten durchgeführt werden kann.

In einer Ausgestaltung ist die Küchenmaschine dazu eingerichtet, auf Basis einer Benutzereingabe oder eines elektronisch gespeicherten Rezepts eine Funktion der Schnittstelle auszuführen. Insbesondere ist die Küchenmaschine so eingerichtet, dass als Reaktion auf eine Instruktion des Benutzers oder des Rezepts die Funktion der Schnittstelle in Abhängigkeit von der erkannten Art des Anbauteils und/oder Funktionsmoduls ausgeführt wird. In dieser Ausgestaltung kann eine bestimmte Instruktion je nach dem verwendeten Anbauteil und/oder Funktionsmodul ggf. abweichend bzw. unterschiedlich ausgeführt werden.

Gibt das Rezept oder der Benutzer z. B. vor, dass eine Speise in einem Topf erhitzt werden soll, erkennt die Küchenmaschine die Art des Topfes und verfügt über die Information, welche Heizeinrichtungen bei dem Topf vorhanden sind und, insbesondere, wie diese angesteuert werden. Auf diese Weise können Speisenzubereitungsprozesse teilautomatisiert ablaufen. Die benötigten elektrischen Kontakte werden dann mit der geeigneten Spannung und/oder dem geeigneten Strom beaufschlagt und diese in geeigneter Weise gesteuert. Dabei ist insbesondere die Art und zeitliche Dauer des jeweiligen Betriebs vom Rezept vorgegeben.

Die Funktion kann als Reaktion auf die Benutzereingabe oder auf einen abzuarbeitenden Rezeptschritt ausgelöst werden. Die Funktion kann in Abhängigkeit von der Benutzereingabe oder dem Rezept ausgeführt werden. Beispielsweise kann der Benutzer über eine Benutzerschnittstelle einstellen oder das Rezept kann über elektronisch hinterlegte Daten vorgeben, dass ein Werkzeug mit einer bestimmten Drehgeschwindigkeit gedreht wird.

Beispielsweise kann das Rezept ein Verriegeln des Anbauteils und/oder ein Verriegeln eines Deckels auf dem Anbauteil vorsehen, beispielsweise wenn gemäß dem Rezept ein Volumen oder eine Masse einer Speise im Anbauteil vorhanden ist, die oberhalb eines Schwellenwert liegt, und/oder wenn eine Temperatur im Anbauteil oder eine Drehzahl eines Werkzeugs oberhalb eines vordefinierten Schwellenwerts ist. Die Küchenmaschine verfügt über die Information, dass das Verriegeln bei dem erkannten Anbauteil bzw. Deckel durch Drehen des Betätigungsteils aus einer Ausgangslage um einen bestimmten Winkel in eine bestimmte Richtung erfolgen muss. Die Küchenmaschine beeinflusst die Funktion in Abhängigkeit der Art des Anbauteils so, dass als Reaktion auf die Instruktion des Rezepts das Betätigungsteil in der erforderlichen Weise gedreht wird, um das Anbauteil mit dem Basisteil zu verriegeln. Sollen sowohl das Anbauteil als auch der Deckel verriegelt werden, wird das Betätigungsteil typischerweise um einen größeren Winkel gedreht. Eine Anpassung der Funktion kann auch während der Abarbeitung des Rezeptes erfolgen, um auf eine erreichten Betriebszustand zu reagieren.

In einem weiteren Beispiel kann der Benutzer ein Rühren mit einer bestimmten Drehzahl einstellen. Erkennt die Küchenmaschine, dass auf den Anbauteil kein Deckel vorhanden ist, kann die Küchenmaschine die Drehzahl begrenzen. Es wird also ggf. abweichend von der Benutzereingabe mit einer geringeren Drehzahl gedreht, um die Sicherheit zu erhöhen. Auch die Drehrichtung kann auf diese Weise beeinflusst werden. Wird ein Mixmesser verwendet, welches in einer ersten Drehrichtung rührt und in der entgegengesetzten, zweiten Drehrichtung zerkleinert, kann bei nicht vorhandenem Deckel eine Drehung auf die erste Drehrichtung begrenzt werden.

In einer Ausführungsform ist die Küchenmaschine dazu eingerichtet, auf Basis eines elektronisch gespeicherten Rezepts eine Zubereitung einer Speise zumindest teilweise automatisch durchzuführen. Eine Steuereinrichtung der Küchenmaschine kann auf ein Rezept zugreifen und durch einen Rezeptschritt des Rezeptes veranlasst werden, eine Funktionskomponente in einer durch den Rezeptschritt definierten Weise zu betreiben.

Das Rezept kann so ausgestaltet sein, dass zumindest ein Rezeptschritt in Abhängigkeit der erkannten Art des Anbauteils gewählt wird. Es kann beispielsweise vorgesehen sein, dass ein Anbraten von Zwiebeln bei einem kleinen Anbauteil in zwei Durchgängen ausgeführt wird, während bei einem großen Anbauteil ein Durchgang genügt. Die Küchenmaschine kann dann in Abhängigkeit der Art des Anbauteils den auszuführenden Rezeptschritt wählen. Alternativ kann die Küchenmaschine einen Rezeptschritt verändern, um ein Rezept, welches beispielsweise für eine erste Art Anbauteil gültig ist, mit einem Anbauteil einer abweichenden zweiten Art auszuführen.

In einer Ausgestaltung ist die Küchenmaschine dazu eingerichtet, insbesondere vor oder während des Betreibens einer Funktionskomponente gemäß einer Instruktion des Benutzers oder des Rezepts zu prüfen, ob der Betrieb gemäß der Instruktion des Benutzers oder des Rezepts für die Art des Anbauteils und/oder Funktionsmoduls zulässig ist. In einer Ausgestaltung ist die Küchenmaschine dazu eingerichtet, den Betrieb gemäß der Instruktion des Benutzers oder des Rezepts der Funktionskomponente zu unterlassen, wenn der Betrieb gemäß der Instruktion des Benutzers oder des Rezepts nicht zulässig ist.

Wenn der Betrieb nicht zulässig ist, kann der Betrieb gänzlich unterlassen werden. Wenn kein Deckel vorhanden ist, kann beispielsweise nicht Schokolade zerkleinert werden. Alternativ kann der Betrieb in diesem Fall mit wenigstens einem veränderten Parameter ausgeführt werden. Wenn kein Deckel vorhanden ist, kann beispielsweise eine Suppe mit verringerter Drehzahl gerührt oder mit verringerter Temperatur warmgehalten werden. Auch dabei wird der instruktionsgemäße Betrieb unterlassen, es erfolgt jedoch ein abweichender Betrieb. So kann die Sicherheit erhöht werden.

Beispielsweise prüft die Küchenmaschine vor jeder Änderung eines Parameters zum Betreiben einer Funktionskomponente, ob dieser Parameter mit dem erkannten Anbauteil und/oder Funktionsmodul zulässig ist. Eine derartige Prüfung kann auch während der Änderung eines Parameters erfolgen, beispielsweise in bestimmten Intervallen. Beispielsweise kann beim Erhöhen der Temperatur ab einer gewissen Temperatur ein Deckel erforderlich sein, um ein Überkochen zu verhindern. Es kann jedoch unter Umständen nicht notwendig sein, den Deckel zu verriegeln. Um einer derartigen, kontinuierlichen Veränderung der Situation im Betriebszustand oder vor der Inbetriebnahme Rechnung zu tragen, kann in bestimmten zeitlichen Intervallen geprüft werden.

Die Küchenmaschine kann dazu eingerichtet sein, eine Information an den Benutzer auszugeben. Dabei kann die Ursache für die Unzulässigkeit angegeben werden, so dass der Benutzer diese beseitigen kann, beispielsweise durch Aufsetzen des Deckels. Ist die Ursache beseitigt, kann detektiert werden, dass das Anbauteil und/oder Funktionsmodul vorhanden ist, und der gewünschte Betrieb kann starten.

Ein weiterer Aspekt der Erfindung ist ein Verfahren zum Zubereiten einer Speise unter Verwendung einer erfindungsgemäßen Küchenmaschine. Das Verfahren umfasst insbesondere Erkennen, durch die Küchenmaschine, einer Art eines mit dem Basisteil mechanisch und/oder elektrisch gekoppelten Anbauteils. Das Verfahren umfasst insbesondere Beeinflussen, durch die Küchenmaschine, einer Funktion der Schnittstelle abhängig von der erkannten Art des Anbauteils. Das Beeinflussen kann umfassen: Bewegen eines Betätigungsteils der Schnittstelle in eine Position, die durch die Art des Anbauteils und/oder einen Betriebszustand der Küchenmaschine vorgegeben ist. Alternativ oder Ergänzend kann das Beeinflussen umfassen: Ansteuern mindestens eines elektrischen Kontakts in einer Weise, die durch die Art des Anbauteils und/oder einen Betriebszustand vorgegeben ist und/oder Drehen einer Welle in einer Weise, die durch die Art des Anbauteils und/oder einen Betriebszustand vorgegeben ist.

In einer Ausgestaltung umfasst das Verfahren Erkennen, durch die Küchenmaschine, einer Art eines mit dem Anbauteil mechanisch gekoppelten Funktionsmoduls. Das Verfahren umfasst insbesondere Beeinflussen, durch die Küchenmaschine, einer Funktion der Schnittstelle abhängig von der erkannten Art des Funktionsmoduls. Das Beeinflussen kann umfassen: Bewegen eines Betätigungsteils der Schnittstelle in eine Position, die durch die Art des Funktionsmoduls und/oder einen Betriebszustand der Küchenmaschine vorgegeben ist. Alternativ oder Ergänzend kann das Beeinflussen umfassen: Ansteuern mindestens eines elektrischen Kontakts in einer Weise, die durch die Art des Funktionsmoduls und/oder einen Betriebszustand vorgegeben ist und/oder Drehen einer Welle in einer Weise, die durch die Art des Funktionsmoduls und/oder einen Betriebszustand vorgegeben ist.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben ist. Die beanspruchten Schutzbereiche sind nicht auf die Ausführungsbeispiele beschränkt.

Es zeigen:
- Figur 1:: eine Seitenansicht eines Basisteils,
- Figur 2:: ein teilweise transparentes vergrößertes Detail eines Basisteils,
- Figur 3:: eine Schnittstelle eines Anbauteils,
- Figur 4:: eine teilweise transparente Seitenansicht eines Anbauteils mit einer aufgesetzten Funktionskomponente,
- Figuren 5 und 6:: Diagramme mit Funktionen eines Betätigungsteils, sowie
- Figur 7:: eine schematische Zeichnung einer Küchenmaschine.

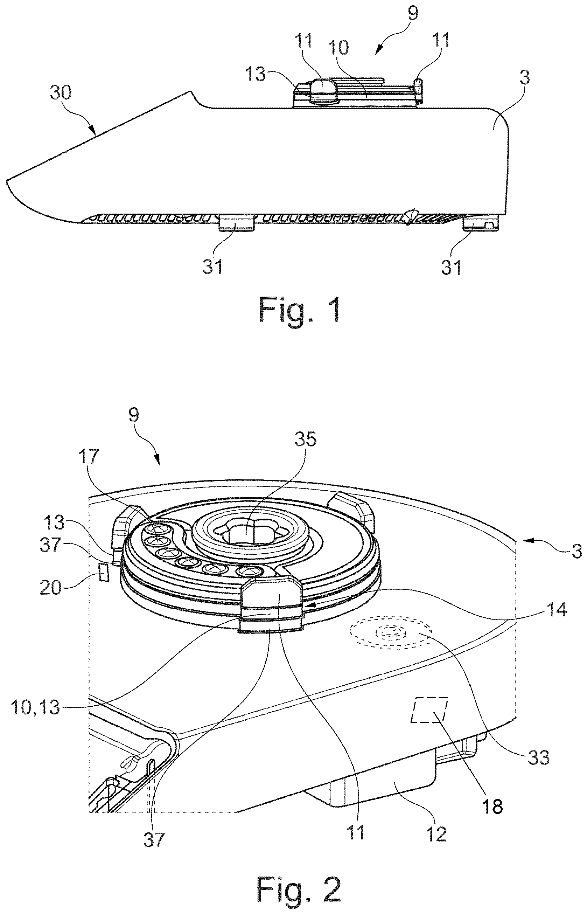

Figur 1 zeigt eine Küchenmaschine, die ein Basisteil 3 umfasst. Das Basisteil 3 umfasst in seiner Unterseite Standfüße 31 und ist dazu eingerichtet, auf einer Küchenarbeitsfläche aufgestellt werden. Das Basisteil 3 umfasst an seiner Oberseite ein berührungsempfindliches Display 30 zur Eingabe und Ausgabe sowie eine Schnittstelle 9 zur mechanischen und elektrischen Kopplung eines Anbauteils am Basisteil 3. Die Schnittstelle 9 umfasst ein Betätigungsteil 10 mit Kontaktelementen 13 sowie Einführelemente 11, die auch in Figur 2 sichtbar sind.

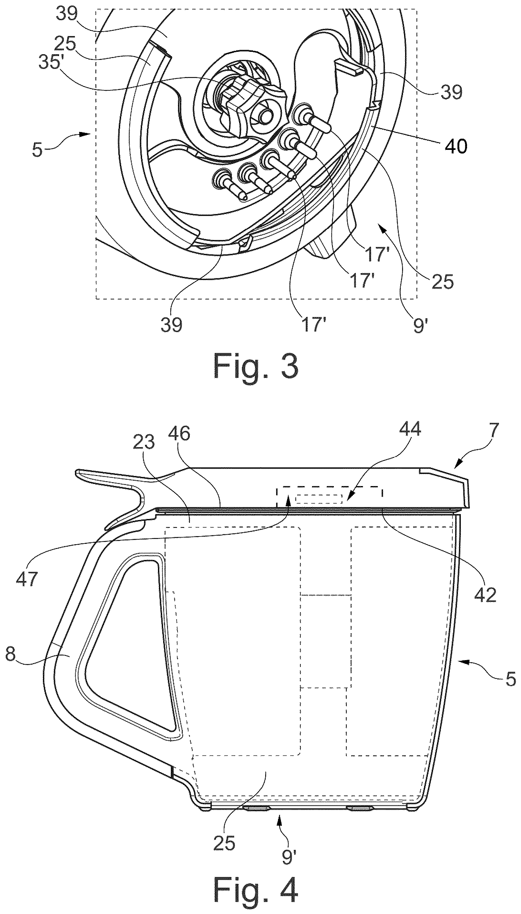

Figur 2 zeigt das Basisteil 3 mit der Schnittstelle 9 in vergrößerter Form von schräg oben. Das Basisteil 3 umfasst eine elektromotorisch angetriebene Welle zum Antreiben eines Werkzeugs oder einer Werkzeugaufnahme in einem Anbauteil. Die Welle hat an der Oberseite eine nicht kreisförmige Kontur 35, die drehfest mit einer korrespondierenden Kontur 35' eines Anbauteils gekoppelt werden kann, wie sie etwa in Figur 3 dargestellt ist. Die Kontur 35 befindet sich typischerweise mittig in der Schnittstelle 9. Die Schnittstelle 9 umfasst ferner elektrische Kontakte 17, die sich unter einer Abdeckung befinden. Die elektrischen Kontakte 17 dienen der Übertragung von elektrischer Energie und/oder Informationen an das Anbauteil bzw. von dem Anbauteil. Die Schnittstelle 9 umfasst typischerweise einen Abdeckring, der die Abdeckung sowie, gleichmäßig über den Umfang verteilt, drei Einführelemente 11 umfassen kann, welche jeweils abgeschrägte Kanten aufweisen und als Einführhilfe beim Koppeln des Anbauteils dienen.

Das Betätigungsteil 10 ist ringförmig und umfasst, gleichmäßig über den Umfang verteilt, drei Kontaktelemente 13. Über einen Aktuator 12 und insbesondere ein Getriebe, hier beispielhaft als Zahnrad 33 dargestellt, kann das Betätigungsteil 10 um seine vertikale Achse gedreht werden, die bevorzugt der Achse der Welle entspricht. In der dargestellten Ausgangsposition des Betätigungsteils 10 fluchten die Kontaktelemente 13 mit den darüber befindlichen Einführelementen 11 und den unten beschriebenen, darunter befindlichen Verriegelungshaken 37. Die Kontaktelemente 13 weisen Kontaktflächen 14 auf und dienen dem Ausführen unterschiedlicher Funktionen, insbesondere beim Anbauteil. Beispielsweise kann das Anbauteil am Basisteil 3 verriegelt werden oder es kann eine Drehbewegung oder Kraft auf eine Übertragungseinrichtung eines Anbauteils übertragen werden.

Unterhalb des Betätigungsteils 10 befindet sich ein Verriegelungsring, an dem die nach außen abstehenden Verriegelungshaken 37 angeordnet sind. Zwei Verriegelungshaken 37 sind sichtbar, ein dritter Verriegelungshaken 37 ist verdeckt. Das Anbauteil 5, das in Figur 3 dargestellt ist, umfasst an seiner Unterseite eine Schnittstelle 9', mit der es mechanisch und elektrisch an die Schnittstelle 9 des Basisteils 3 gekoppelt werden kann. Beim Verriegeln des Anbauteils 5 taucht die Baugruppe aus Einführelementen 11, Kontaktelementen 13 und Verriegelungshaken 37 (siehe Figur 2) in die Aussparungen 39 im Verbindungsring 40. Der Verbindungsring 40 ist drehbar im Anbauteil 5 gelagert. Wird jetzt das Betätigungsteil 10 gedreht, kontaktieren die Kontaktflächen 14 des Betätigungsteils 10 die Begrenzungen der Aussparungen 39 und die Kontaktelemente 13 drehen den Verbindungsring 40 mit. Dabei gelangt das den Aussparungen 39 benachbarte Material des Verbindungsrings 40 zwischen die Verriegelungshaken 37 und die Einführelemente 11. Auf diese Weise wird das Anbauteil 5 zumindest in axialer Richtung formschlüssig mit dem Basisteil verriegelt. Zudem ermöglicht diese Konstruktion, dass der Verbindungsring 40 weiter gedreht werden kann, während das Anbauteil 5 im verriegelten Zustand verbleibt. Insbesondere umfasst das Anbauteil 5 und/oder die Schnittstelle 9 zudem Formschlusselemente, die ein Drehen des Anbauteils 5 in der Schnittstelle 9 verhindern.

Beim Aufsetzen des Anbauteils auf die Schnittstelle 9 werden zudem elektrische Kontakte 17' des Anbauteils 5 mit den elektrischen Kontakten 17 der Schnittstelle 9 verbunden. Die konkrete Ausgestaltung der jeweiligen Kontakte 17, 17' ist dabei unerheblich. Zudem erfolgt eine drehfeste Verbindung der Kontur 35' des Anbauteils 5 mit der Kontur 35 der Schnittstelle 9.

Figur 2 zeigt schematisch, dass das Basisteil 3 einen Positionssensor 20 umfasst, mit dem eine Drehposition des Betätigungsteils 10 ermittelt werden kann. Insbesondere ist eine Detektionseinrichtung des Positionssensors 20 direkt oder indirekt mit einem Gehäuse des Basisteils verbunden, während ein Geberelement insbesondere direkt mit dem Betätigungsteil 10 verbunden ist. Die Detektionseinrichtung kann so direkt und sehr präzise die Drehposition des Betätigungsteils 10 ermitteln. Zudem umfasst die Küchenmaschine, insbesondere das Basisteil 3, eine Empfangseinheit 19, mit dem Informationen über die Art des Anbauteils empfangen werden können. Bevorzugt umfasst die Empfangseinheit 19 wie dargestellt zumindest einen elektrischen Kontakt 17 insbesondere der Schnittstelle 9. Das Anbauteil kann dann elektrische oder elektronische Daten, die zumindest die Art des Anbauteils identifizieren, an das Basisteil senden. Bevorzugt umfasst die Küchenmaschine, insbesondere das Basisteil 3, ferner eine Steuerungseinrichtung 18.

Der Verbindungsring 40 (siehe Figur 3) ist in der hier gezeigten Ausführungsform Teil einer Übertragungseinrichtung 25 (siehe Figur 4), die sich in einer Wand des Anbauteils 5 bzw. zwischen einer Innenwand und einer Außenwand des Anbauteils 5 erstreckt und in Figur 4 sichtbar ist. Die Übertragungseinrichtung 25 erstreckt sich insbesondere von der Schnittstelle 9' an der Unterseite des Anbauteils 5 bis zu einer weiteren Schnittstelle 6 an der Oberseite des Anbauteils 5. Die Übertragungseinrichtung 25 ist gestrichelt dargestellt, da sie sich hinter der Außenwand des Anbauteils 5 befindet. Mit der Schnittstelle 6 der Figur 4 kann ein Funktionsmodul 7 mechanisch und gegebenenfalls auch elektrisch gekoppelt werden. In Figur 4 ist das Anbauteil 5 beispielhaft ein Speisenzubereitungsgefäß mit einem Griff 8 und das Funktionsmodul 7 ist ein Deckel, der auf dem Anbauteil 5 verriegelt werden kann. Die Übertragungseinrichtung 25 kann durch Drehen des Betätigungsteils 10 entlang der zentralen, vertikalen Drehachse des Betätigungsteils 10 gedreht werden.

Die Übertragungseinrichtung 25 kann im Bereich ihrer Unterseite Formelemente aufweisen, beispielsweise zum Verriegeln des Anbauteils 5 mit dem Basisteil 3. im oben beschriebenen Beispiel der Figur 3 sind diese Formelemente Teil des Verbindungsrings 40. In einem Beispiel kann die Übertragungseinrichtung an der Unterseite eine Bajonettgeometrie aufweisen. Es kann vorgesehen sein, dass das Betätigungsteil 10 die Bajonettgeometrie dreht und so die Verriegelung herstellt. In einer ersten Drehposition der Übertragungseinrichtung 25 ist das Funktionsmodul 7 somit auf dem Anbauteil verriegelt und in einer abweichenden, zweiten Drehposition kann das Funktionsmodul 7 vom Anbauteil 5 gelöst werden.

Die Übertragungseinrichtung 25 kann im Bereich ihrer Oberseite Formelemente aufweisen, beispielsweise zum Verriegeln eines Funktionsmoduls 7 am Anbauteil 5, die in korrespondierende Elemente des Funktionsmoduls 7 eingreifen. Es kann an der Oberseite der Übertragungseinrichtung eine Bajonettgeometrie 44 vorhanden sein. Im hier gezeigten Ausführungsbeispiel umfasst das Funktionsmodul 7 Haken 42, die in einen Ring 46 an der Oberseite des Anbauteils eingreifen. Wie oben beschrieben können Drucktaschen 47 vorhanden sein, in denen Sperrelemente gegen einen Anschlag fahren, und die so ein Entriegeln eines angehobenen Deckels verhindern.

Ferner kann das Anbauteil 5 eine Empfangseinheit 23 zum Empfang von Informationen zur Erkennung der Art des gekoppelten Funktionsmoduls 7 umfassen. Die Empfangseinheit 23 kann mittels elektrischer Kontakte an der Schnittstelle 9' des Anbauteils 5 entsprechende Daten an das Basisteil senden.

Die Küchenmaschine kann dazu eingerichtet sein, eines, mehrere oder alle der folgenden Szenarien auszuführen.

In Szenario A) wird als Anbauteil ein Topf verwendet. Es ist kein Funktionsmodul vorhanden. Der Topf muss nicht mit dem Basisteil verriegelt werden. Das Betätigungsteil wird nicht verwendet. Die Küchenmaschine kann die Art des Anbauteils und ggf. das Nichtvorhandensein des Funktionsmoduls erkennen und/oder prüfen, ob der gewünschte Betrieb mit den vorhandenen Komponenten zulässig ist und den Betrieb entsprechend ausführen, verändert ausführen oder sperren bzw. nicht ausführen. Es kann erkannt werden, dass sich das Betätigungsteil in der Ausgangsposition befindet. Z. B. kann eine Heizeinrichtung des Topfes durch Anlegen von elektrischem Strom an ein oder zwei elektrische Kontakte betrieben werden.

In Szenario B) wird als Anbauteil ein Topf und als Funktionsmodul ein Deckel verwendet. Nach der Erkennung dieser Komponenten kann die Küchenmaschine das Betätigungsteil so steuern, dass der Topf am Basisteil verriegelt wird und insbesondere zudem so, dass der Deckel am Topf verriegelt wird. Beim Erhitzen mit verriegeltem Deckel kann es zu einem unplanmäßigen Krafteinwirkung im Topf auf den Deckel kommen. Das Funktionsmodul und das Anbauteil können so ausgestaltet sein, dass das Funktionsmodul durch den Überdruck in eine angehobene Position gelangt, in der insbesondere der Topf weiterhin fest verschlossen ist. Beim Versuch, das Funktionsmodul zu entriegeln, kann beispielsweise durch eine zu hohe Stromaufnahme des Aktuators detektiert werden, dass das Entriegeln nicht möglich ist. Dies kann z. B. durch die beschriebenen Drucktaschen bewirkt werden. Die Küchenmaschine kann nach einer Wartezeit einen erneuten Versuch unternehmen, das Funktionsmodul zu entriegeln.

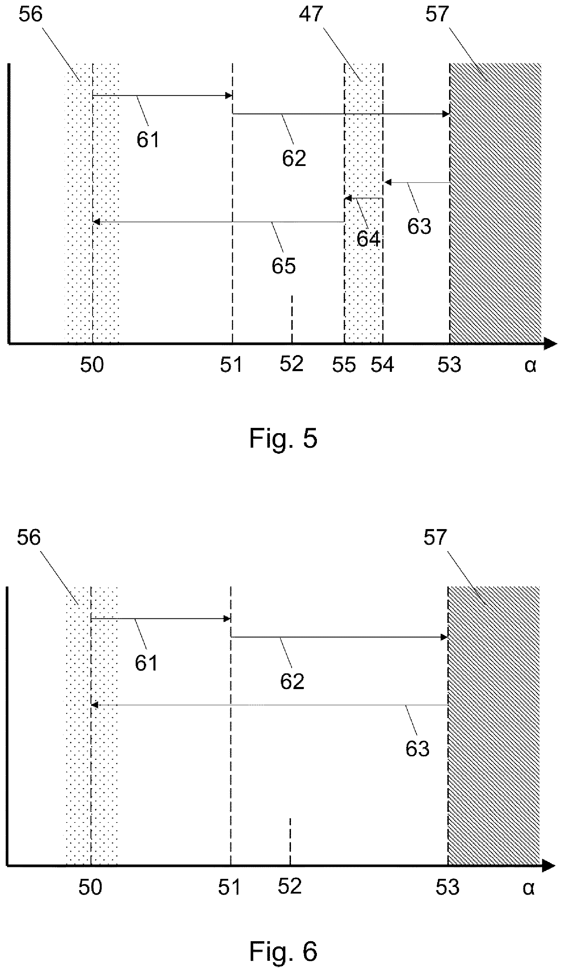

Figur 5 zeigt in einem Diagramm Funktionen einer Ausgestaltung der Küchenmaschine in Abhängigkeit von der Drehposition des Betätigungsteils, beispielsweise im Szenario B). Die Küchenmaschine umfasst ein mit dem Basisteil mechanisch gekoppeltes Anbauteil in Form eines Topfes und ein mit dem Topf mechanisch gekoppeltes Funktionsmodul in Form eines Deckels. Auf der x-Achse ist der Drehwinkel α als Maß für die Drehposition des Betätigungsteils aufgetragen. Die Ausgangsposition 50, die als 0° definiert wird, ist eine entriegelte Position, in der der Topf vom Basisteil genommen oder darauf platziert werden kann und in der der Deckel vom Topf genommen oder darauf platziert werden kann. Die Ausgangsposition 50 kann der in Figur 2 gezeigten Position entsprechen. Um die Ausgangsposition 50 herum kann sich ein Konfidenzbereich 56 befinden, beispielsweise von ± 1°, um Messungenauigkeiten Rechnung zu tragen.

Wird das Betätigungsteil bei einer ersten Drehung 61 in eine als Verriegelungsrichtung bezeichnete Drehrichtung gedreht, erreicht es zunächst eine Zwischenposition 51, die etwa bei 12° liegen kann. In dieser Position hat das Betätigungsteil die Überlappung mit den Verriegelungshaken etwa zur Hälfte verlassen. Bis zu dieser Position kann eine erhöhte Stromaufnahme des Aktuators toleriert werden, um etwaigen Verschmutzungen, die etwa im Bereich der Verriegelungshaken mit der Zeit auftreten können, zu berücksichtigen. So kann ein Fehlschlagen der Verriegelung verhindert werden.

Wird das Betätigungsteil in einer zweiten Drehung 62 in der Drehrichtung weitergedreht, erreicht es die dritte Drehposition 53, die der Verriegelungsposition des Deckels auf dem Topf entspricht. Es ist hierbei unerheblich, ob der Topf am Basisteil verriegelt ist oder nicht. Ein Weiterdrehen in der Drehrichtung ist hier beispielhaft nicht vorgesehen. Der rechts von der dritten Drehposition 53 befindliche Bereich ist zu weit 57 und wird in einem nicht defekten System nicht erreicht. Dieser Bereich würde nur in einem Fehlerfall erreicht werden können.

Wird das Betätigungsteil in einer dritten Drehung 63 in die entgegengesetzte Entriegelungsrichtung gedreht, wenn gleichzeitig eine Kraft den Deckel nach oben drückt und dieser deshalb eine angehobene Position angenommen hat, ist ein Entriegeln nicht unmittelbar möglich. Die Drehung erfolgt lediglich bis zu einer vierten Drehposition 54. Es wurde beispielsweise eine oben beschriebene Drucktasche angefahren. Sobald der Deckel wieder in der normalen Position ist, kann eine vierte Drehung 64 bis zur fünften Drehposition 55 erfolgen und die Drucktasche passiert werden. Anschließend kann in einer fünften Drehung 65, die in einem Schritt mit der vierten Drehung 64 erfolgen kann, der Deckel entriegelt werden.

Es kann eine weitere, zweite Drehposition 52 geben, in der lediglich der Topf mit dem Basisteil verriegelt ist, aber der Deckel nicht verriegelt ist. Diese kann vorteilhaft zwischen der Ausgangsposition 50 und der vierten Drehposition 54 liegen, insbesondere wie angedeutet zwischen der Zwischenposition 51 und der vierten Drehposition 54.

Ist ein Verriegeln eines Anbauteils oder Funktionsmoduls nicht erfolgreich, können ein oder mehrere erneute Versuche erfolgen, z. B. drei Versuche, das Verriegeln umzusetzen. Zwischen den Versuchen wird üblicherweise keine Wartezeit eingefügt. Ist ein Entriegeln eines Anbauteils oder Funktionsmoduls nicht erfolgreich, kann geprüft werden, z. B. anhand der Drehposition des Betätigungsteils, ob die Drucktasche angefahren wurde. Wenn ja, können ein oder mehrere erneute Versuche erfolgen, z. B. vier Versuche, das Entriegeln umzusetzen. Zwischen den Versuchen wird üblicherweise eine Wartezeit eingefügt. Wartezeiten können bei jeder Wiederholung länger werden, z. B. in 2s, dann 3s, dann 4s, dann 5s. Wenn nein, können ein oder mehrere erneute Versuche erfolgen, z. B. drei Versuche, das Entriegeln umzusetzen, üblicherweise ohne Wartezeit.

In Szenario C) wird als Anbauteil ein Topf verwendet. Es ist ein Funktionsmodul vorhanden, welches einen Schneidaufsatz umfasst. Das Betätigungsteil dient zur Verriegelung des Topfes sowie des Funktionsmoduls. Ein Krafteinwirkung auf die Innenseite des Deckels ist nicht möglich. Wird die Art des verwendeten Funktionsmoduls erkannt, werden etwaige eine oder mehrere Heizeinrichtungen deaktiviert.

Ähnlich wie Figur 5 zeigt Figur 6 Funktionen einer Ausgestaltung der Küchenmaschine in Abhängigkeit von der Drehposition des Betätigungsteils, beispielsweise im Szenario C). Auch hier wird das Funktionsmodul am Anbauteil verriegelt und entriegelt. Die Funktionen ähneln den oben Beschriebenen und es wird hier zur Vermeidung von Wiederholungen lediglich auf die Unterschiede eingegangen. Beim Drehen in der Entriegelungsrichtung kann hier unmittelbar durch die dritte Drehung 63 verriegelt werden.

Ist ein Entriegeln eines Anbauteils oder Funktionsmoduls nicht erfolgreich, können ein oder mehrere erneute Versuche erfolgen, z. B. drei Versuche, das Entriegeln umzusetzen. Zwischen den Versuchen wird üblicherweise keine Wartezeit eingefügt.

In Szenario D) wird als Anbauteil ein anderer Topf verwendet. Es ist ein Funktionsmodul in Form eines Deckels vorhanden. Ein Verriegeln des Topfes oder des Deckels ist nicht vorgesehen. Es ist ein Erhitzen eines oder beider Heizeinrichtungen des Topfes über die entsprechenden elektrischen Kontakte möglich. Der Topf kann ein drehbares Werkzeug enthalten, welches optional betrieben werden kann. Ein Drehen eines Betätigungsteils wird in diesem Szenario nicht benötigt.

In Szenario E) wird als Anbauteil ein Schnellkochtopf und als Funktionsmodul ein druckbeständiger Deckel verwendet, der ein ansteuerbares Ventil zur Druckentlastung aufweist. Das Betätigungsteil kann verwendet werden, um insbesondere unter Verwendung einer Übertragungseinrichtung das Ventil anzusteuern. Es kann zusätzlich oder alternativ zu einigen oder allen der in Figur 5 oder 6 gezeigten Drehpositionen eine sechste Drehposition geben, bei der das Ventil geschlossen ist, eine siebte Drehposition, bei der das Ventil minimal geöffnet ist, z. B. mit einem Öffnungsquerschnitt von 1% der vollen Öffnung, etwa zum Ablassen eines hohen Drucks, eine achte Drehposition, bei der das Ventil halb geöffnet ist, z. B. mit einem Öffnungsquerschnitt von 50%, und/oder eine neunte Drehposition, bei der das Ventil voll geöffnet ist. Die sechste Drehposition kann bei 0° liegen, die siebte Drehposition bei etwas über 0°, die achte Drehposition bei 8° und/oder die neunte Drehposition bei 16°.

In Szenario F) wird als Anbauteil ein Schnellkochtopf und als Funktionsmodul ein verriegelbarer, druckbeständiger Deckel verwendet, der ein ansteuerbares Ventil zur Druckentlastung aufweist. Neben dem Ansteuern des Ventils kann das Betätigungsteil verwendet werden, um den Topf zu verriegeln und entriegeln. Es kann zusätzlich oder alternativ zu einigen oder allen der in Figur 5 oder 6 gezeigten Drehpositionen eine sechste Drehposition geben, die einer Grundposition und/oder 0°-Position entspricht, bei der das Ventil geschlossen und der Topf nicht verriegelt ist, eine siebte Drehposition in Form einer oben beschriebenen Zwischenposition, z. B. bei 12°, eine achte Drehposition, bei der Topf und Deckel verriegelt sind und das Ventil geschlossen ist, z. B. bei 30°, sowie weitere Drehpositionen, bei denen Topf und Deckel verriegelt bleiben und das Ventil wie folgt geöffnet ist: eine neunte Drehposition, bei der das Ventil minimal geöffnet ist, z. B. mit einem Öffnungsquerschnitt von 1% der vollen Öffnung, etwa bei 31°, etwa zum Ablassen eines hohen Drucks, eine zehnte Drehposition, bei der das Ventil halb geöffnet ist, etwa bei 38°, und/oder eine elfte Drehposition, bei der das Ventil voll geöffnet ist, etwa bei 46°. Eine oder mehrere Heizeinrichtungen können wie in Szenario D) verwendet werden.

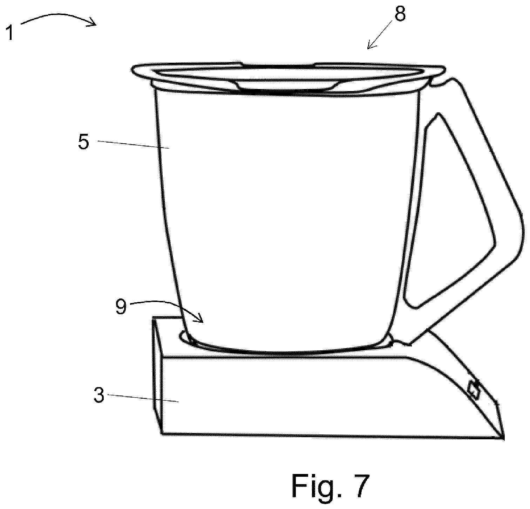

Figur 7 zeigt eine Küchenmaschine 1, die ein Basisteil 3 mit einer Schnittstelle 9 zum mechanischen und elektrischen Koppeln mit einem Anbauteil 5 umfasst. In die Schnittstelle 9 ist ein Anbauteil 5 eingesetzt worden.

**Bezugszeichenliste**

| | |
|---|---|
| Küchenmaschine | 1 |
| Basisteil | 3 |
| Anbauteil | 5 |
| Schnittstelle | 6 |
| Funktionsmodul | 7 |
| Griff | 8 |
| Schnittstelle | 9, 9' |
| Betätigungsteil | 10 |
| Einführelement | 11 |
| Aktuator | 12 |
| Kontaktelement | 13 |
| Kontaktfläche | 14 |
| Elektrischer Kontakt | 17, 17' |
| Steuerungseinrichtung | 18 |
| Empfangseinheit | 19 |
| Positionssensor | 20 |
| Sensor | 23 |
| Übertragungseinrichtung | 25 |
| Display | 30 |
| Standfuß | 31 |
| Zahnrad | 33 |
| Kontur | 35, 35' |
| Verriegelungshaken | 37 |
| Aussparung | 39 |
| Verbindungsring | 40 |
| Haken | 42 |
| Bajonettgeometrie | 44 |
| Ring | 46 |
| Drucktasche | 47 |
| Ausgangsposition | 50 |
| Zwischenposition | 51 |
| Zweite Drehposition | 52 |
| Dritte Drehposition | 53 |
| Vierte Drehposition | 54 |
| Fünfte Drehposition | 55 |
| Konfidenzbereich | 56 |
| Zu weit | 57 |
| Drehwinkel | α |
| Erste Drehung | 61 |
| Zweite Drehung | 62 |
| Dritte Drehung | 63 |
| Vierte Drehung | 64 |
| Fünfte Drehung | 65 |

## Patentansprüche

1. Küchenmaschine (1) umfassend ein Basisteil (3), wobei das Basisteil (3) eine Schnittstelle (9) zur mechanischen und/oder elektrischen Kopplung mit einem Anbauteil (5) aufweist, wobei die Küchenmaschine (1) dazu eingerichtet ist, eine Art des Anbauteils (5) zu erkennen und abhängig von der erkannten Art des Anbauteils (5) eine Funktion der Schnittstelle (9) zu beeinflussen, um das Anbauteil (5) für eine Speisenzubereitung zu betreiben.

2. Küchenmaschine (1) nach dem vorhergehenden Anspruch, wobei die Schnittstelle (9) ein drehbares Betätigungsteil (10) zum Ausführen einer Funktion beim Anbauteil (5) umfasst, wobei das Basisteil (3) einen Aktuator (12) zum Antrieb des Betätigungsteils (10) umfasst, wobei die Küchenmaschine (1) dazu eingerichtet ist, abhängig von der erkannten Art des Anbauteils (5) den Aktuator (12) zu steuern, um eine Position oder Bewegung des Betätigungsteils (10) zu beeinflussen.

3. Küchenmaschine (1) nach einem der vorhergehenden Ansprüche, wobei die Schnittstelle (9) mehrere elektrische Kontakte (17) zur Übertragung von Daten und/oder elektrischer Energie zwischen dem Basisteil (3) und dem Anbauteil (5) umfasst, wobei die Küchenmaschine (1) dazu eingerichtet ist, abhängig von der erkannten Art des Anbauteils (5) die Verwendung zumindest eines elektrischen Kontakts (17) zu steuern.

4. Küchenmaschine (1) nach einem der zwei vorhergehenden Ansprüche, ferner umfassend einen Positionssensor (20) zur Detektion einer Drehposition des Betätigungsteils (10).

5. Küchenmaschine (1) nach einem der vorhergehenden Ansprüche, wobei die Schnittstelle (9) eine Empfangseinheit (19) zum Empfang von Informationen zwecks Erkennung der Art des Anbauteils (5) aufweist, wobei die Empfangseinheit (19) insbesondere wenigstens einen elektrischen Kontakt (17) einer Datenschnittstelle umfasst.

6. Küchenmaschine (1) nach einem der vorhergehenden Ansprüche, wobei das Basisteil (3) Zugriff auf Eigenschaften des erkannten Anbauteils (5) hat und dazu eingerichtet ist, die Funktion der Schnittstelle (9) abhängig von den Eigenschaften des Anbauteils (5) zu steuern.

7. Küchenmaschine (1) nach einem der vorhergehenden Ansprüche, ferner umfassend das Anbauteil (5), wobei das Anbauteil (5) ein Speisenzubereitungsgefäß ist, wobei das Anbauteil (5) eine Schnittstelle (6) zur mechanischen Kopplung mit einem Funktionsmodul (7) aufweist, wobei das Funktionsmodul (7) insbesondere ein Abdeckteil für das Anbauteil (5) oder ein Zerkleinerungsteil zum Zerkleinern einer Speise ist.

8. Küchenmaschine (1) nach dem vorhergehenden Anspruch, wobei die Küchenmaschine (1) dazu eingerichtet ist, ein Vorhandensein und eine Art des Funktionsmoduls (7) zu erkennen und abhängig von dem erkannten Vorhandensein und/oder der erkannten Art eine Funktion der Schnittstelle (9) zu beeinflussen, wobei insbesondere am Anbauteil (5) eine Empfangseinheit zum Empfang von Informationen zwecks Erkennung der Art des Funktionsmoduls (7) angeordnet ist.

9. Küchenmaschine (1) nach einem der sieben vorhergehenden Ansprüche, ferner umfassend das Anbauteil (5), wobei das Anbauteil (5) eine Übertragungseinrichtung (25) zum Übertragen einer Bewegung des Betätigungsteils (10) zwecks Ausführung einer Funktion beim Funktionsmodul (7) aufweist.

10. Küchenmaschine (1) nach dem vorhergehenden Anspruch, wobei das Basisteil (3) und das Anbauteil (5) so eingerichtet sind, dass
- das Anbauteil (5) in einer Ausgangsposition (50) des Betätigungsteils (10) mechanisch mit dem Basisteil (3) koppelbar ist,
- das Anbauteil (5) in einer von der Ausgangsposition (50) verschiedenen zweiten Drehposition (52) des Betätigungsteils (10) mit dem Basisteil (3) verriegelt ist, und
- sich in einer von der Ausgangsposition (50) sowie der zweiten Drehposition (52) verschiedenen dritten Drehposition (53) des Betätigungsteils (10) mindestens ein mit der Übertragungseinrichtung (25) in Wirkverbindung stehendes Verriegelungselement des Anbauteils (5) in einer Verriegelungsposition befindet, um ein Funktionsmodul (7) zu verriegeln.

11. Küchenmaschine (1) nach einem der vorhergehenden Ansprüche, wobei die Küchenmaschine (1) dazu eingerichtet, die Funktion der Schnittstelle (9) in Abhängigkeit von einem aktuellen Betriebszustand der Küchenmaschine anzupassen.

12. Küchenmaschine (1) nach einem der vorhergehenden Ansprüche, ferner umfassend das Funktionsmodul (7), wobei das Funktionsmodul (7) ein Deckel zum Abdecken des Anbauteils (5) ist, wobei das Funktionsmodul (7) im Falle einer von unten auf das Funktionsmodul (7) wirkenden Kraft eine angehobene Position einnimmt, in der ein Entriegeln des Funktionsmoduls (7) nicht möglich ist, wobei die Küchenmaschine (1) dazu eingerichtet ist, zu erkennen, ob die Art des Anbauteils (5) und des Funktionsmoduls (7) die angehobene Position des Funktionsmoduls (7) ermöglichen und falls ja, nach einem Fehlversuch des Entriegelns des Funktionsmoduls (7) eine Wartezeit einzufügen und anschließend einen erneuten Versuch zu unternehmen, das Funktionsmodul (7) zu entriegeln.

13. Küchenmaschine (1) nach einem der vorhergehenden Ansprüche, wobei die Küchenmaschine (1) dazu eingerichtet ist, auf Basis einer Benutzereingabe oder eines elektronisch gespeicherten Rezepts eine Funktion der Schnittstelle (9) auszuführen, wobei die Küchenmaschine (1) so eingerichtet ist, dass als Reaktion auf eine Instruktion des Benutzers oder des Rezepts die Funktion der Schnittstelle (9) in Abhängigkeit von einer erkannten Art des Anbauteils (5) und/oder Funktionsmoduls (7) ausgeführt wird.

14. Küchenmaschine (1) nach dem vorhergehenden Anspruch, wobei die Küchenmaschine (1) dazu eingerichtet ist, vor oder während des Betreibens einer Funktionskomponente gemäß der Instruktion des Benutzers oder des Rezepts zu prüfen, ob der Betrieb gemäß der Instruktion des Benutzers oder des Rezepts für die Art des Anbauteils (5) und/oder Funktionsmoduls (7) zulässig ist, und den Betrieb gemäß der Instruktion des Benutzers oder des Rezepts der Funktionskomponente zu unterlassen, wenn der instruktionsgemäße Betrieb nicht zulässig ist.

15. Verfahren zum Zubereiten einer Speise unter Verwendung einer Küchenmaschine (1) gemäß einem der vorhergehenden Ansprüche, umfassend die Schritte:
- Erkennen, durch die Küchenmaschine (1), einer Art eines mit dem Basisteil (3) mechanisch und/oder elektrisch gekoppelten Anbauteils (5),
- Beeinflussen, durch die Küchenmaschine (1), einer Funktion der Schnittstelle (9) abhängig von der erkannten Art des Anbauteils (5),
wobei das Beeinflussen insbesondere umfasst: Bewegen eines Betätigungsteils (10) der Schnittstelle in eine Position, die durch die Art des Anbauteils (5) und/oder einen Betriebszustand der Küchenmaschine (1) vorgegeben ist.

16. Verfahren nach dem vorhergehenden Anspruch, ferner umfassend:
- Erkennen, durch die Küchenmaschine (1), einer Art eines mit dem Anbauteil (5) mechanisch gekoppelten Funktionsmoduls (7),
- Beeinflussen, durch die Küchenmaschine (1), einer Funktion der Schnittstelle (9) abhängig von der erkannten Art des Funktionsmoduls (7),
wobei das Beeinflussen insbesondere umfasst: Bewegen eines Betätigungsteils (10) der Schnittstelle in eine Position, die durch die Art des Funktionsmoduls (7) und/oder einen Betriebszustand der Küchenmaschine (1) vorgegeben ist.
